**Europäisches Patentamt**

**European Patent Office**

**Office européen des brevets**

(19)

(11) Veröffentlichungsnummer: **0 504 586 A2**

## (12) EUROPÄISCHE PATENTANMELDUNG

(21) Anmeldenummer: **92102364.4**

(22) Anmeldetag: **13.02.92**

(51) Int. Cl.⁵: **B60H 1/00**

(30) Priorität: **22.03.91 DE 4109419**

(43) Veröffentlichungstag der Anmeldung:
**23.09.92 Patentblatt 92/39**

(84) Benannte Vertragsstaaten:
**DE FR GB IT**

(71) Anmelder: **Bayerische Motoren Werke Aktiengesellschaft
Patentabteilung AJ-3 Postfach 40 02 40
Petuelring 130
W-8000 München 40(DE)**

(72) Erfinder: **Orth, Walter
Säulingstrasse 38
W-8000 München 21(DE)**
Erfinder: **Schemmerer, Martin
Paul-Klee-Strasse 24
W-8300 Landshut(DE)**
Erfinder: **Möller, Rolf, Dr.
Watzmannstrasse 19 a
W-8031 Gilching(DE)**

(54) **Fahrzeugheizgerät mit zwei alternierend mit einem Hauptkanal verbindbaren Luftkanälen.**

(57) Zu einem Hauptkanal (4) eines Fahrzeugheizgerätes führt ein Umluft-Ansaugkanal (6) und ein Frischluft-Ansaugkanal (5), die alternierend zugeschaltet werden sollen. Erfindungsgemäß sind hierfür keine Klappen erforderlich, wenn einer der beiden Kanäle bewegbar ist. Bevorzugt ist das freie Ende des bewegbaren Kanales (6) faltenbalgartig ausgebildet und wird ringförmig vom zweiten Kanal (5) umgeben. Schließt der Faltenbalg (8) den Hauptkanal (4) an, so wird der ringförmige zweite Kanal (5) versperrt. Angegeben ist auch eine Variante, die bei offengelegtem zweiten Kanal den beweglichen ersten Umluftkanal verschließt.

Fig. 1

EP 0 504 586 A2

Die Erfindung betrifft ein Fahrzeugheizgerät mit zumindest zwei Luftkanälen, die durch ein Bedienelement alternierend oder gleichzeitig mit einem Hauptkanal verbindbar sind. Bekannt und üblich ist es an Fahrzeugheizgeräten, hierzu in den einzelnen Luftkanälen oder in deren Mündungsbereich Klappen vorzusehen, die dann die Kanäle freigeben oder verschließen können. Derartige Klappen erfordern jedoch einen gewissen Bauraum und stellen darüber hinaus oftmals auch in geöffnetem Zustand ein nicht zu vernachlässigendes Strömungshindernis dar.

Daher ist es Aufgabe der vorliegenden Erfindung, ein Fahrzeugheizgerät aufzuzeigen, bei dem zumindest zwei Luftkanäle alternierend oder gleichzeitig mit einem Hauptkanal verbindbar sind, ohne daß hierzu Klappen erforderlich wären.
Zur Lösung dieser Aufgabe ist vorgesehen, daß zumindest einer der Luftkanäle zu einer Öffnung des Hauptkanales hin oder von dieser weg bewegbar ist. Vorteilhafte Aus und Weiterbildungen der Erfindung beschreiben die Unteransprüche.

Ist erfindungsgemäß einer der Luftkanäle selbst bewegbar, so übernimmt er nicht nur die an sich bekannte Funktion der Führung eines Luftstromes, sondern kann zugleich auch die Funktion einer im Stand der Technik üblichen Klappe ausüben. Ist der bewegbare Luftkanal dabei nahezu luftdicht mit einer Mündungsöffnung des Hauptkanales verbunden, wird gleichzeitig die Verbindung zu dem oder den weiteren, nichtbewegbaren Luftkanälen unterbrochen. Ein Entfernen des bewegbaren Luftkanales bzw. der bewegbaren Luftkanäle hingegen schaltet den weiteren starren Luftkanal zu. Dabei beschreiben die Ansprüche 4 und 5 vorteilhafte Ausgestaltungen, mit denen der bewegbare Luftkanal mit dem Entfernen vom Hauptkanal abgesperrt wird. Nach diesen Unteransprüchen stellt der bewegbare Luftkanal einen Umluft-Ansaugkanal dar, während der weitere Luftkanal ein Frischluft-Ansaugkanal ist. Wird nun der bewegbare Umluftkanal von dem zum Gebläse des Fahrzeugheizgerätes führenden Hauptkanal entfernt, so saugt das Gebläse aufgrund des geringeren Strömungswiderstandes Luft größtenteils über den Frischluftkanal an. Um dabei zu verhindern, daß Frischluft unter Umgehung des Hauptkanales direkt vom Frischluftkanal in den Umluftkanal und somit in den Fahrzeug-Innenraum gelangen kann, ist im Umluftkanal eine Rückschlagklappe angeordnet.

Alternativ kann jedoch der Umluftkanal beim Wegbewegen vom Hauptkanal auch durch eine membranartig ausgebildete flexible Kanalwand verschlossen werden. Eine derartige flexible Kanalwand, die auch faltenbalgartig ausgebildet sein kann, ist gemäß Anspruch 2 vorgesehen, um dem bewegbaren Luftkanal auf einfache Weise eine ausreichende Bewegungsfreiheit zu geben. Insbesondere dieser bewegbare Wandabschnitt kann dann die eingangs geschilderte Klappenfunktion übernehmen. Ist der bewegbare Wandabschnitt nämlich mit dem Hauptkanal verbunden, so kann er zugleich eine Mündungsöffnung des weiteren, nichtbewegbaren Luftkanales abdecken. Wird jedoch die bewegbare Kanalwand vom Hauptkanal entfernt, so kann sie insbesondere bei membranartiger Ausbildung den sich an den bewegbaren Wandabschnitt anschließenden Mündungsbereich des starren Abschnittes des Umluftkanales absperren. Dabei kann ein Federelement den bewegbaren Wandabschnitt in einer Richtung vorteilhafterweise schlagartig bis zu einem Anschlag bewegen.

Eine konstruktiv besonders einfache sowie raumsparende Anordnung beschreibt Anspruch 3. Demnach münden zwei Luftkanäle konzentrisch zueinander im Bereich der Öffnung des Hauptkanales, wobei der innere Luftkanal bewegbar ist. Insbesondere wenn der außerhalb liegende ringförmig mündende Luftkanal als Frischluft-Ansaugkanal ausgebildet ist, bietet es sich hierbei an, in dessen Mündungsbereich eine ebenfalls ringförmig gestaltete Filtereinheit vorzusehen. Vorgesehen sein kann desweiteren ein den geometrischen Verhältnissen angepaßter Betätigungshebel zum Verschieben des bewegbaren Luftkanales. Verbunden ist dieser Betätigungshebel mit dem Bedienelement, das selbstverständlich nicht nur ein vom Fahrzeugführer bedienbarer Knopf oder Hebel sein kann, sondern auch als ein von einer Steuerlogik angesteuerter Stellmotor ausgebildet sein kann. Weist der bewegbare Luftkanal einen flexiblen Wandabschnitt auf, so kann dieser Wandabschnitt auch durch den Betätigungshebel stabilisiert werden. Hierzu kann der Betätigungshebel in den Kanalquerschnitt hineinragen und eine spinnenartige Struktur besitzen, um einen ausreichenden Strömungsquerschnitt sicherzustellen.

Zwei in Prinzipskizzen dargestellte bevorzugte Ausführungsbeispiele dienen der näheren Erläuterung der Erfindung. Gezeigt ist jeweils ein Schnitt durch ein Fahrzeugheizgerät in dem Bereich, in dem ein Umluft-Ansaugkanal und ein Frischluft-Ansaugkanal in einen Hauptkanal münden.

Bestandteil eines Fahrzeugheizgerätes 1 ist ein von einem Motor 2 angetriebenes Gebläse 3, das die zu behandelnde, d. h. zu klimatisierende Luft durch das Heizgerät in den Fahrzeug-Innenraum fördert. Das Gebläse 3 soll dabei sowohl Frischluft bzw. Umgebungsluft (Pfeile 20) als auch Umluft (Pfeile 21), d. h. Luft aus dem Fahrzeug-Innenraum, ansaugen können. Hierzu ist direkt stromauf des Gebläses 3 ein sog. Hauptkanal 4 vorgesehen, in den ein als Frischluftkanal fungierender erster Luftkanal 5 und/oder ein als Umluftkanal fungierender zweiter Luftkanal 6 münden. Während der erste Luftkanal 5 im wesentlichen zentral zum zumindest annähernd einen Kreisquerschnitt aufweisenden Hauptkanal 4 mündet, umgibt der zweite Luftkanal 6 den ersten Luftkanal 5 im wesentlichen ringförmig. Im Mündungsbereich des ersten Luftkanales 5 ist darüber hinaus eine ebenfalls ringförmige Filtereinheit 7 angeordnet.

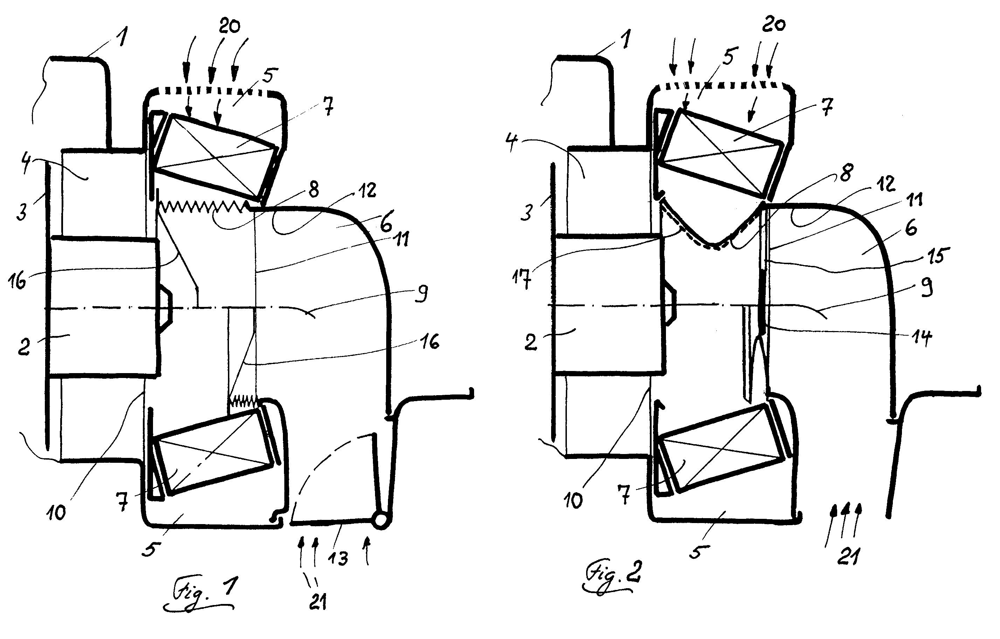

Wahlweise soll entweder der erste Luftkanal 5 oder der zweite Luftkanal 6 mit dem Hauptkanal 4 verbunden werden. Hierzu weist der zweite Luftkanal 6 im Mündungsbereich einen flexiblen Wandabschnitt 8 auf, der beim Ausführungsbeispiel nach Fig. 1 als Faltenbalg und beim Ausführungsbeispiel nach Fig. 2 als membranartiger Gummibalg ausgebildet ist. Dieser flexible Wandabschnitt 8 ist oberhalb bzw. unterhalb der Kanal-Mittellinie 9 in verschiedenen Zuständen dargestellt. Oberhalb der Kanal-Mittellinie 9 liegt der flexible Wandabschnitt 8 mit seinem freien Ende am Rand der Mündungsöffnung 10 des Hauptkanales 4 an, unterhalb der Kanal-Mittellinie 9 ist das freie Ende des flexiblen Wandabschnittes 8 möglichst weit zum Mündungsbereich 11 der starren Kanalwand 12 des zweiten Luftkanales 6 zurückgeschoben. Während im letztgenannten Zustand die Austrittsöffnung des ersten Luftkanales (über die Filtereinheit 7) freigegeben ist, ist dieser erste Luftkanal 5 im jeweils oberhalb der Kanal-Mittellinie 9 dargestellten Zustand durch den flexiblen Wandabschnitt 8 versperrt. In Abhängigkeit von der Position des flexiblen Wandabschnittes 8 bzw. von der Lage des allgemein als bewegbar bezeichneten zweiten Luftkanales 6 hängt es somit ab, ob das Gebläse 3 Frischluft über den ersten Luftkanal 5 oder Umluft über den zweiten Luftkanal 6 ansaugt.

Um zu verhindern, daß bei geöffnetem Frischluftkanal 5, d. h. bei dem unterhalb der Kanal-Mittellinie 9 dargestellten Zustand auch Umluft in den Hauptkanal 4 und/oder Frischluft aus dem Frischluftkanal 5 in den Umluftkanal 6 und von diesem aus in den Fahrzeug-Innenraum gelangt, sind bei den Ausführungsbeispielen nach den Fig. 1 und 2 verschiedene Maßnahmen vorgesehen. Beim Ausführungsbeispiel nach Fig. 1 befindet sich im Umluftkanal 6 eine Rückschlagklappe 13. Diese Rückschlagklappe 13 verhindert zum einen sicher, daß Frischluft aus dem ersten Luftkanal 5 über den Umluftkanal 6 in den unterhalb der Rückschlagklappe 13 liegenden Fahrzeug-Innenraum gelangen kann und bildet darüber hinaus ein Strömungshindernis, das bei geöffnetem Frischluftkanal 5 ein Ansaugen von Umluft im wesentlichen verhindert.

Beim Ausführungsbeispiel nach Fig. 2 ist der flexible Wandabschnitt 8 als membranartiger Gummibalg ausgeführt. Im Zusammenwirken mit einer zentral angeordneten Abdeckscheibe 14 - diese ist mittels eines Steges 15 an der starren Kanalwand 12 im Mündungsbereich 11 befestigt - verschließt der membranartige Gummibalg durch entsprechenden Faltenwurf im zurückgeschobenen Zustand (dargestellt unterhalb der Mittellinie 9) den Mündungsbereich 11 des Umluftkanales 6. Oberhalb der Kanal-Mittellinie 9 ist der flexible Wandabschnitt 8 wiederum in der den Frischluftkanal 5 absperrenden Position dargestellt.

Am freien Ende des flexiblen Wandabschnittes 8 greift bei beiden Ausführungsbeispielen (Fig. 1 und Fig. 2) ein zu einem nicht gezeigten Bedienelement führender Betätigungshebel 16 an. Das nichtgezeigte Bedienelement initiiert dabei die beschriebene Verschiebebewegung des flexiblen Wandabschnittes 8. Zur Stabilisierung des flexiblen Wandabschnittes 8 durchquert der Betätigungshebel 16 den Querschnitt des Umluftkanales 6 und besitzt aus Stabilitätsgründen sowie zur Minimierung des Strömungswiderstandes eine spinnenartige Struktur. Ferner greift beim Ausführungsbeispiel nach Fig. 2 am freien Ende des flexiblen Wandabschnittes 6 ein in den membranartigen Gummibalg integriertes Federelement 17 an, das den Wandabschnitt 8 in die zurückgeschobene Position (gemäß der Darstellung unterhalb der Kanal-Mittellinie 9) zu schieben trachtet. Dieses Federelement 17 stellt somit sicher, daß bei einer Umschaltung von Umluftbetrieb auf Frischluftbetrieb blitzartig der Mündungsbereich 11 des Umluftkanales 6 verschlossen wird, um zu verhindern, daß auch nicht für eine kurze Zeitspanne Frischluft direkt über den Umluftkanal 6 in den Fahrzeug-Innenraum gelangen kann.

Selbstverständlich sind neben den prinzipiell dargestellten Ausführungsbeispielen auch andere Varianten möglich, die unter den Umfang der Patentansprüche fallen. Stets kann dabei eine Umschaltung zwischen zwei oder mehreren Luftkanälen bezüglich eines Hauptkanales erfolgen, ohne daß eine aufwendige, bauraumintensive Klappenanordnung erforderlich ist.

## Patentansprüche

1. Fahrzeugheizgerät mit zumindest zwei Luftkanälen (5, 6), die durch ein Bedienelement alternierend oder gleichzeitig mit einem Hauptkanal (4) verbindbar sind,
   dadurch gekennzeichnet, daß zumindest einer der Luftkanäle (6) zu einer Öffnung (10) des Hauptkanales (4) hin oder von dieser weg bewegbar ist.

2. Fahrzeugheizgerät nach Anspruch 1, dadurch gekennzeichnet, daß der bewegbare Luftkanal (6) zumindest teilweise durch einen flexiblen Wandabschnitt (8) gebildet wird.

3. Fahrzeugheizgerät nach Anspruch 1 oder 2, dadurch gekennzeichnet, daß ein erster Luftkanal (5) ringförmig oder ringsegmentförmig zu einem zweiten im wesentlichen zentral angeordneten, bewegbaren Luftkanal (6) am Hauptkanal (4) mündet.

4. Fahrzeugheizgerät nach einem der Ansprüche 1 bis 3, wobei die beiden zum Hauptkanal (4) führenden Luftkanäle (5, 6) ein Frischluftkanal und ein Umluftkanal sind, dadurch gekennzeichnet, daß im Umluftkanal (6) eine Rückschlagklappe (13) angeordnet ist.

5. Fahrzeugheizgerät nach einem der Ansprüche 1 bis 3, wobei die beiden zum Hauptkanal (4) führenden Luftkanäle (5, 6) ein Frischluftkanal und ein Umluftkanal sind,
dadurch gekennzeichnet, daß der flexible Wandabschnitt (8) des bewegbaren Umluftkanales (6) membranartig ausgebildet ist und im den Frischluftkanal (5) freigebenden Zustand den Mündungsbereich (11) des Umluftkanales (6) versperrt.

6. Fahrzeugheizgerät nach einem der Ansprüche 1 bis 5, dadurch gekennzeichnet, daß am freien Ende des flexiblen Wandabschnittes (8) des bewegbaren Luftkanales (6) ein Federelement (17) angreift.

7. Fahrzeugheizgerät nach einem der Ansprüche 1 bis 6, dadurch gekennzeichnet, daß im ringförmigen Mündungsbereich des ersten Luftkanales (5) eine ringförmige Filtereinheit (7) angeordnet ist.

8. Fahrzeugheizgerät nach einem der Ansprüche 1 bis 7, dadurch gekennzeichnet, daß am flexiblen Wandabschnitt (8) ein direkt oder indirekt mit dem Bedienelement verbundener Betätigungshebel (16) angreift.

9. Fahrzeugheizgerät nach Anspruch 8, dadurch gekennzeichnet, daß der Betätigungshebel (16) im Querschnitt des Luftkanales (6) eine spinnenartige Struktur besitzt.

Fig. 1

Fig. 2

EP 0 504 586 A2